# EUROPEAN PATENT APPLICATION

(11) **EP 1 031 491 A1**
(43) Date of publication of application: **30.08.2000**
(21) Application number: 00301210.1
(22) Date of filing: 16.02.2000
(51) Int. Cl.: B62D 5/04, B62D 1/19

(54) **Improvements in or relating to vehicle steering**

(30) Priority: 24.02.1999 GB 9904092
(71) Applicant: ADWEST STEERING LIMITED, Reading, Berkshire RG5 4SN (GB)
(72) Inventor: Rajkovic, Milos Alexander, Newbury, Berkshire RG18 9JF (GB); Millard, Barry John, Reading, Berkshire RG6 7EB (GB)
(74) Representative: Brown, David Leslie

(57) **Abstract**

An electric power assisted steering assembly (10) for an automobile is described, the assembly having an electric motor (12) mounted co-axially with the steering column (11) and having drive means, preferably in the form of planetary gearbox (13), to transfer drive from the motor (12) to the column (11). The column (11) is provided in two co-axial parts (16) and (17) which are telescopic with respect to one another and the motor (12) and gearbox (13) are mounted on the shaft in such a way as not to impede the telescopic movement of column part (16) with respect to column part (17). It is a further characteristic of the motor and gearbox assembly that substantially no resistance to self-centering of a steering system to which the power assisted assembly is fitted.

## Description

### Field of the Invention

This invention relates to vehicle steering and, in particular, to an electronic power steering system for incorporation in automobiles.

### Background

Electronic power steering systems have been known for some time. By way of example, our European Patent 0 717,692B describes an electronic power steering system in which the manually operated steering drive member is linked to a coaxial power assistance drive which, in turn, is mounted on or closely adjacent the pinion of a rack and pinion steering system.

The operation of the system described in European Patent 0 717,692 is largely satisfactory, however it is now becoming commonplace to fit smaller cars with power steering systems. This presents new problems in that smaller cars tend to have very limited space in the engine compartment and it is often difficult, if not impossible, to provide sufficient space to accommodate an electric power steer system.

To address the lack of engine compartment space, yet retain the installation and operating benefits of an electronic power steering system over an hydraulic system, some component suppliers have developed forms of electronic power steering system in which the electric motor which provides the power assistance, is mounted on the steering column within the passenger compartment. However these systems use a motor projecting, usually at right angles to the column which imparts drive to the column through a worm drive. This arrangement is not only relatively bulky but the worn drive inhibits, if not completely prevents, self centering and the attempts to overcome this deficiency through the system electronics markedly reduces the "road feel" experienced by a driver.

It is an object of this invention to provide an electric power steering system which addresses at least some of the drawbacks mentioned above, or which will at least provide a useful alternative choice.

### Summary of the Invention

Accordingly, in one aspect, the invention provides a steering assembly for fitting to the interior of a steerable vehicle, said assembly including:
a steering column having an axis of rotation;
an electric power assistance motor having a drive axis; and
drive means operable to transfer drive from said power assistance motor to said steering column,
said assembly being characterised in that said drive axis is aligned substantially parallel to said axis of rotation.

Preferably said drive axis is substantially co-axial with said axis of rotation.

Preferably said drive means comprises a planetary gearbox.

In a second aspect the invention provides a steering assembly for fitting to the interior of a steerable vehicle, said assembly including:
a steering column having an axis of rotation;
an electric power assistance motor having a drive axis substantially co-axial with said axis of rotation;
drive means to transfer drive from said power assistance motor to said steering column;
said assembly being characterised in that at least part of said steering column is axially displaceable with respect to at least one of said power assistance motor or said drive means.

Preferably the position of said drive means is fixed with respect to said power assistance motor, said steering column being displaceable with respect to both said motor and said drive means.

Preferably said drive means comprises a planetary gearbox.

Said steering column has a lower end mounted at or adjacent a firewall of a parent vehicle and an upper end to which a steering wheel is fitted, said motor and said drive wheel preferably being mounted closer to said upper end.

Preferably said steering column is provided in two co-axial parts, said two parts being telescopic with respect to one another.

In a third aspect the invention provides a method of providing power assistance to the steering column of a steerable vehicle, said method including the steps of:
arranging an electric power assistance motor about a part of said steering column located in the interior of said vehicle such that said column passes co-axially through said motor; and
providing drive means to transfer drive from said motor to said column.

In a fourth aspect the invention provides a steering assembly for mounting in the interior of an automobile, said assembly including:
a first steering column part engageable with the steered wheels of said automobile;
a second steering column part on which a steering wheel is mounted, said second column part being co-axial and rotatable with, but being telescopic with respect to, said first column part;
an electric power assistance motor mounted co-axially with said first and second steering column parts;
drive means operable to transfer drive from said motor to one of said steering column parts;
said assembly being characterised in that said motor and said drive means are axially fixed with respect to one of said steering column parts but are constructed and arranged to a allow the other of said steering column parts to move axially with respect thereto.

Preferably said motor and said drive means are supported by that one of said column parts able to be displaced axially with respect thereto.

In a fifth aspect the invention provides a power assisted steering system for fitting to the interior of a steerable vehicle, said assembly including:
a steering column having a steering wheel at or adjacent an end thereof;
an electric power assistance motor;
drive means operable to transfer drive from said motor to said column; and
electronic control means operable to energise said motor in response to torque being applied to said column through said steering wheel,
said assembly being characterised in that said drive means and said motor are constructed and arranged to impart substantially no resistance to self-centering motion of the steering.

Preferably said motor is arranged about said column and is substantially co-axial therewith. Preferably said drive means comprises a planetary gearbox.

Many variations in the way the present invention may be performed will present themselves to those skilled in the art. The description which follows is intended as an illustration only and the absence of description of particular alternatives or variants should in no way be applied to limit the scope of the invention. Such description of specific elements which follows should also be interpreted as including equivalents whether existing now or in the future. The scope of the invention should be defined solely by the appended claims.

### Brief Description of the Drawing

One form of steering assembly incorporating the various aspects of the invention will now be described with reference to the accompanying drawings in which:
- Figure 1:: shows a schematic cross-sectional view through a steering column assembly incorporating an electric power assistance;
- Figure 2:: shows a schematic block diagram of electronic control means suitable for incorporation in an electric power steering assembly according to the invention; and
- Figure 3:: shows a more detailed view of a torque transducer arrangement suitable for incorporation in the assembly shown in Figure 1.

### Description of Working Embodiment

Referring to the drawings, the present invention provides a steering assembly 10 for fitting into the interior of a steerable vehicle (not shown). In particular, steering assemblies embodying the various aspects of the invention are particularly intended for use in smaller classes of automobiles as, in vehicles of this type, engine compartment space is generally limited for the fitting of power assisted steering systems, and the losses associated with hydraulic power assisted steering systems are proportionally more pronounced in smaller automobiles.

In the form shown the steering assembly broadly comprises a steering column 11, an electric motor 12 and drive means 13 to transfer drive from the motor 12 to the column 11.

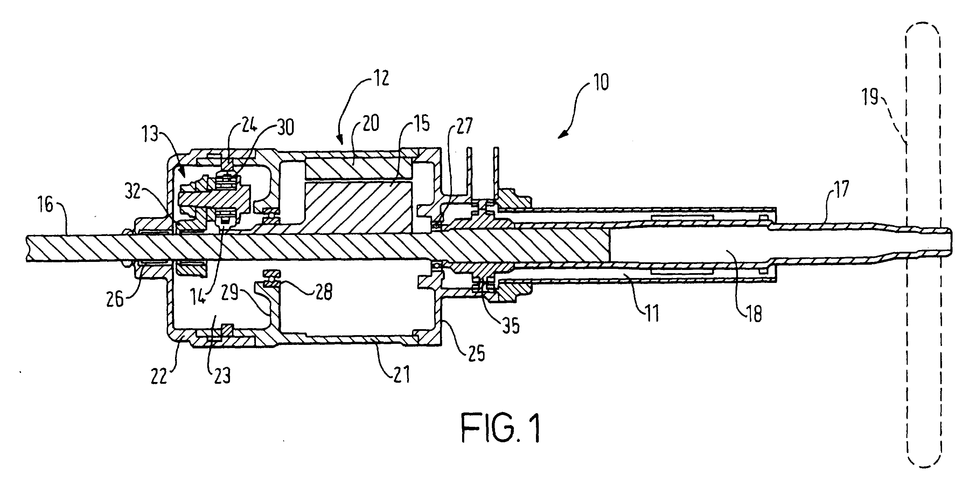

As can be seen in Figure 1, the drive axis of the motor 12 is parallel to the central axis of the steering column 11 and, more particularly, the motor 12 is arranged about the column so that the drive axis is, in fact, substantially co-axial with the column 11. This therefore ensures an extremely compact final assembly.

In keeping with the requirement of compactness, the drive means 13 is conveniently provided in the form of a planetary gearbox, the sun gear 14 of which is defined by, or is coupled to, rotor 15 of the motor 12. The ratio of the gearbox is preferably about 1 to 5 due to available diametral relationships between components. However it will be appreciated that diameters can be adjusted according to space availability and/or to vary the ratio.

In the embodiment depicted, the column 11 comprises a first column part 16 and a second column part 17, the two parts 16 and 17 being co-axial and rotating with one another. However, it will be seen that the second or upper column part 17 is hollow and this permits the column parts to telescope with respect to one another. More particularly, the solid lower shaft can slide axially into the cavity 18 provided in the interior of column part 17.

Upon installation, the lower column part 16 is coupled with a further steering component (not shown) which passes through the bulkhead (not shown) dividing the passenger compartment with the engine compartment and is ultimately connected to the steerable road wheels via the steering box or rack. The upper column part 17 serves to mount a steering wheel 19 in the conventional manner.

The electric motor 12 is preferably of the contactless type and includes a rotor 15 rotating within stator 20. We have found that a satisfactory performance can be achieved using a brushless, 3-phase, 8 pole DC motor arranged to give high torque at very low, or no, speed and drawing a maximum battery current of about 30 Amps.

As shown, the rotor 15 is a sliding fit over the column part 16 whilst the stator 20 is held in concentric motor housing 21. Motor housing 21 extends forward to, in combination with end cap 22, define a gearbox housing 23. Outer annular gear 24 of the planetary gearbox 13 is mounted on the annular extension of housing part 21.

The other end of the motor housing 21 is closed by a further end cap 25, the end caps 22 and 25 also serving to mount bearings 26 and 27 to rotatably receive and support the column part 16. A further bearing 28 mounted in wall section 29 dividing the gearbox and motor housings, serves to support the output side of the rotor 15 (and thus the sun gear 14) in relation to the planet gears of the gearbox 13, one of which is shown at 30 in Figure 1.

In the conventional manner, the planet gears 30 are mounted on output carrier 32 which, in turn, is fixed on column part 16 to rotate therewith. However, the nature of the connection between carrier 32 and the column part 16 is such as to ensure the carrier rotates with the column part 16 yet, if the part 16 is subjected to an axial displacing force , the column part 16 may slide axially with respect to the carrier 32. To this end, the carrier might be splined or keyed to the column part 16.

The motor and gearbox housing parts 21, 22 and 25 define a solid outer casing which may include or mount suitable brackets (not shown) to allow the assembly to be mounted into a vehicle.

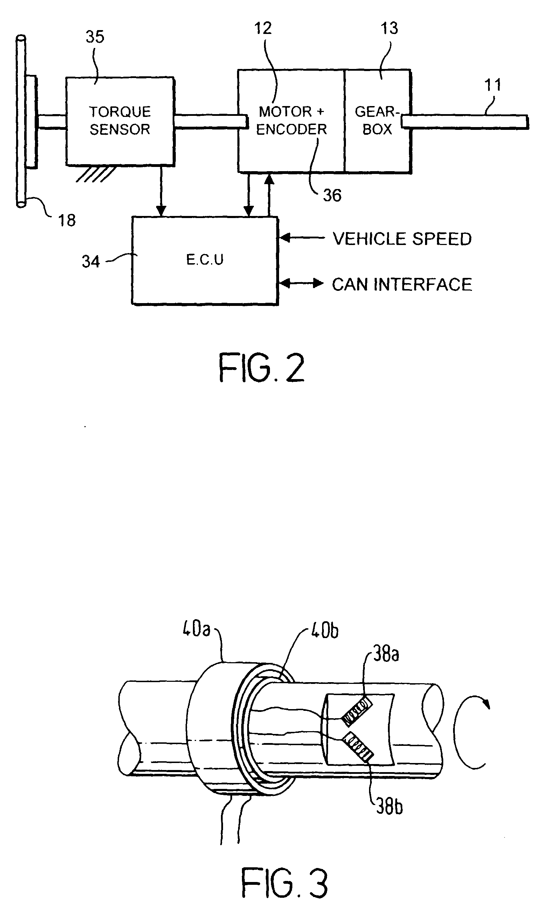

Referring now to Figures 2 and 3 ,the steering system 10 as described above also needs to include a suitable control system to control the assisting torque applied by the motor 12, through the gearbox 13, to the column 11.

In the form shown the control system includes a torque transducer 35 mounted on steering column 11 to gauge the torque applied to the column, by a driver, through the steering wheel 18. A signal from the torque transducer 35 is fed to an electronic control unit 34 along with a signal from an encoder 36 presenting the angular position of the rotor 15. The control unit 34 then processes these signals in any suitable manner and outputs a drive current to the motor 12 in such a way as to ensure a smooth application of assisting torque to the column 11 through the drive means 13.

The torque transducer arrangement is preferably of the non-contact type to ensure that the transducer 35 itself, contributes no measurable counter torque on the column 11. We have found that extremely good results can be achieved using surface acoustic wave (SAW) torque transducers made by Transence Technologies of Upper Heyford, near Oxford, England. As can be seen in Figure 3, two transducer elements 38a and 38b are mounted on a flat section of the column 11, each element being at 45° to the column axis, and being at 90 ° to one another. In this particular application each transducer comprises a 6mm x 2mm sliver of piezo-electric quartz on top of which is etched an array of interwoven "fingers". As torque is imparted to the column 11 through steering wheel 18, the fingers on one element spread while those on the other element move closer together. The outputs from the two elements are surface acoustic waves and one set will rise in frequency while the other set will fall. The difference in the resulting frequencies gives a precise measure of torque.

The frequency outputs from the SAW arrays are measured using non-contact RF couples 40a, 40b arranged about the column 11. Outputs from the couples 40a, 40b are connected into the control unit 34.

As will be seen from Figure 1, the torque transducer assembly is mounted at that end of the column 11, on column part 17, to be as near as practically possible, to the steering wheel 19.

In practice the control system will have further sophistications. For example, the control system will provide for road speed to be inputted to reflect the fact that less steering assistance is required as speed increases. The control system may further include a CAN interface providing a link with vehicle diagnostics and/or other signal inputs.

It will be appreciated, by those of ordinary skill in the art, that the control system may take various forms and will vary according to the nature of the motor 12, the form of torque transducer 35, encoder 36, and the characteristics of the particular vehicle to which the steering system is intended to be fitted. Accordingly while an outline description of the control system is provided, the same does not form part of this invention.

Thus, in normal use, power applied to the motor 12 will cause the rotor, and thus the sun gear 14, to rotate planet gears 30. In the conventional manner, the rotation of the planets 30 is reacted by the outer annular gear 24 thus causing carrier 32 to rotate and apply rotation to the column part 16. However, should an axial displacement force be applied to the column, such as might happen in the event of the vehicle experiencing a frontal impact, the column part 16 is free to move axially with respect to the motor and gearbox components and accommodate itself within the cavity 18 in upper column part 17.

It will thus be appreciated that the present invention, at least in the case of the embodiment herein described, provides a relatively simple, yet extremely compact, steering column assembly which retains all the desirable benefits of an electronic power assistance arrangement whilst incorporating the further benefits of safety collapsibility and minimal resistance to self-centering.

## Claims

1. A steering assembly for fitting to the interior of a steerable vehicle, said assembly including:
a steering column (11) having an axis of rotation;
an electric power assistance motor (12) having a drive axis; and
drive means (13) operable to transfer drive from said power assistance motor (12) to said steering column (11),
said assembly being characterised in that said drive axis is aligned substantially parallel to said axis of rotation.

2. An assembly as claimed in claim 1 wherein said drive axis is substantially co-axial with said axis of rotation.

3. An assembly as claimed in claim 1 or claim 2 wherein said drive means (13) comprises a planetary gearbox.

4. A steering assembly (10) for fitting to the interior of a steerable vehicle, said assembly including:
a steering column (11) having an axis of rotation;
an electric power assistance motor (12) having a drive axis substantially co-axial with said axis of rotation;
drive means (13) to transfer drive from said power assistance motor (12) to said steering column (11);
said assembly being characterised in that at least part (16) of said steering column (11) is axially displaceable with respect to at least one of said power assistance motor (12) or said drive means (13).

5. An assembly as claimed in claim 4 wherein the position of said drive means (13) is fixed with respect to said power assistance motor (12), said steering column (16) being displaceable with respect to both said motor and said drive means.

6. An assembly as claimed in claim 4 or c laim 5 wherein said drive means comprises a planetary gearbox (13).

7. An assembly as claimed in any one of claims 4 to 6 wherein said steering column (11) has a lower end mountable at or adjacent a firewall of a parent vehicle and an upper end to which a steering wheel (19) is fitted, said motor (12) and said drive means (13) being mounted closer to said upper end.

8. An assembly as claimed in any one of claims 4 to 7 wherein said steering column (11) is provided in two co-axial parts (16,17), said two parts being telescopic with respect to one another.

9. A method of providing power assistance to the steering column of a steerable vehicle, said method including the steps of:
arranging an electric power assistance motor (12) about a part of said steering column (11) located in the interior of said vehicle such that said column (11) passes co-axially through said motor (12); and
providing drive means (13) to transfer drive from said motor (12) to said column (11).

10. A steering assembly for mounting in the interior of an automobile, said assembly including:
a first steering column (16) part engageable with the steered wheels of said automobile ;
a second steering column part (17) on which a steering wheel (19) is mounted, said second column part being co-axial and rotatable with, but being telescopic with respect to, said first column part;
an electric power assistance motor (12) mounted co-axially with said first and second steering column parts (16,17);
drive means (13) operable to transfer drive from said motor (12) to one of said steering column parts;
said assembly being characterised in that said motor (12) and said drive means (13) are axially fixed with respect to one of said steering column parts (17) but are constructed and arranged to a allow the other of said steering column parts (16) to move axially with respect thereto.

11. An assembly as claimed in claim 10 wherein said motor (12) and said drive means (13) are supported by that one of said column parts (16) able to be displaced axially with respect thereto.
